# EUROPEAN PATENT SPECIFICATION

(11) **EP 3 174 408 B1**
(45) Date of publication and mention of the grant of the patent: **05.12.2018**
(21) Application number: 15747776.1
(22) Date of filing: 29.07.2015
(51) Int. Cl.: A23L 27/00, C07C 233/11, C07C 233/22

(54) **SOLID DISPERSION OF AMIDE FLAVOR COMPOUNDS**
FESTE DISPERSION VON AMIDAROMAVERBINDUNGEN
DISPERSION SOLIDE DE COMPOSÉS AMIDE AROMATIQUES

(30) Priority: 01.08.2014 US 201462031860 P
(43) Date of publication of application: 07.06.2017
(73) Proprietor: Firmenich SA, 1211 Geneva 8 (CH)
(72) Inventor: BEAUSSOUBRE, Pascal, CH-1211 Geneva 8 (CH); FIEBER, Wolfgang, CH-1211 Geneva 8 (CH); BUDIJONO, Stéphanie, New York, New York 10128 (US); NORMAND, Valery, Plainsboro, New Jersey 08536 (US)
(74) Representative: Rupp, Christian
(86) International application number: PCT/EP2015/067323
(87) International publication number: WO 2016/016276

(56) References cited:
- EP-A1- 2 737 807
- WO-A1-2013/000673
- US-A1- 2006 269 610
- US-A1- 2012 308 703

## Description

### FIELD

The field is related to a delivery system for poorly water soluble flavors or taste modifiers that are amides.

### BACKGROUND

Amides described in Patent Application Number WO 2013/000673 are poorly soluble in water and difficult to solubilize. Hence, it would be advantageous to provide a means for increasing the dissolution rates of these compounds in water. Formulations of these compounds are furthermore described in EP2737807 and US2012/0308703.

### SUMMARY

The invention is as defined in the claims. Provided herein is a method of improving the dissolution rate in water of a compound of 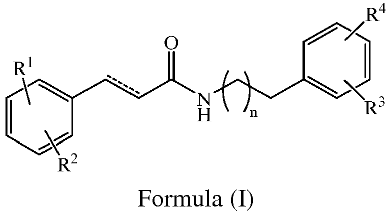 in the form of any one of its stereoisomers or a mixture thereof, and wherein n is an integer from 0 to 2;the dotted line represents a carbon-carbon single or double bond; and each of R¹ to R⁴, when taken independently from each other, represents a hydrogen atom or represents a R⁵ or OR⁵ group, R⁵ representing a C₁ to C₅ alkyl group; and optionally one of the groups R¹ to R⁴ represents -OH; and/or when R¹ and R² are taken together, and/or R³ and R⁴ are taken together, represent a OCH₂O group, provided said groups taken together are adjacent substituents of the phenyl group,
wherein the method consists of the following steps:
a. dissolving the compound in a water miscible solvent at high concentration of from 1% w/w to 20% w/w;
b. mixing the solution with an aqueous solution in the presence of a water soluble stabilizer to form a solvent mixture comprising a suspension of crystals of the compound; and
c. removing the solvent to obtain a solid dispersion comprising a particle comprised of the compound coated by the stabilizer.

### DETAILED DESCRIPTION

In one embodiment, the solvent comprises a water miscible, volatile organic solvent. In a particular embodiment the solvent is selected from the group consisting of propylene glycol, benzyl alcohol, propanol, ethanol, triacetin, and ethyl citrate. In a particular embodiment, the solvent is selected from the group consisting of propylene glycol and propanol. In a more particular embodiment the solvent is propylene glycol. In another embodiment, the solvent is propanol. In another embodiment the solvent is a mixture of two or more water miscible, volatile organic solvents. A compound of Formula (I) is dissolved in the water miscible volatile organic solvent at a concentration from 1% w/w to 20% w/w, and even more particularly from 1% w/w to 10% w/w. In another embodiment, the solvent phase is defined as follows: A solvent in which the compound can be dissolved at the aforementioned high concentrations (solubility > 1% w/w at a temperature varying from 15°C to 90°C).
The anti-solvent or non-solvent is ideally mixed at a ratio to the solvent phase that allows for rapid precipitation of the hydrophobic active.

The suitable stabilizer for the particles described herein comprises a highly water soluble food grade polymer or emulsifier. The stabilizer is chosen from the group consisting of gelatin, zein, proteins, vegetable protein, casein, starch, pectin, octenyl succinate starch, gum Arabic, saponin and sucrose esters. In a particular embodiment gelatin is selected from the group consisting of chicken, fish and beef gelatin. In another embodiment the stabilizer is a mixture of two or more water soluble food grade polymers or emulsifier. The stabilizer is added to water at a concentration from about 0.001% w/w to about 20% w/w, ,more particularly at a concentration from about 0.001% w/w to about 10% w/w, even more particularly from about 0.1% w/w to about 10% w/w. In one embodiment, the stabilizer may be added at a concentration sufficient to allow for the complete protection of the hydrophobic active.

In one embodiment the aqueous solution is buffered at a specific pH value ranging from 0 to 14.

In one embodiment, the water miscible solvent with the dissolved compound of Formula (I) is added to the aqueous solution containing stabilizer. The concentration of a compound of Formula (I) in the solvent mixture needs to be greater than its solubility limit to allow for the precipitation of the compound of Formula (I).

In another embodiment a particle is provided, prepared and/or obtainable by the methods described herein. In a particular embodiment provided herein is a particle comprising a crystallized compound of Formula (I) coated with gelatin wherein the particle has an average length of about 1 µm to about 10 µm and an average width of about 0.3 µm to about 3 µm.

In a further embodiment particle is provided in the substantial absence of a block copolymer, particularly less than 0.5% of a block copolymer, more particularly less than 0.1% of a block copolymer and even more particularly less than 0.01% of a block copolymer.

In one embodiment a particle provided herein dissolves in water at a rate of up to 30ppm/min at a temperature of about 60°C, particularly at a rate of 10 ppm/min at a temperature of about 60°C.

In one aspect, the methods provided herein provide increased dissolution rates of a compound of Formula (I) in water. In another aspect, the methods provided herein may further enhance the performance of a compound of Formula (I) as flavors or taste modulators in food and beverage applications. While not wishing to be bound to any theory, it is postulated that the solid dispersion is obtained via anti-solvent precipitation. The anti-solvent here would, in one embodiment, be water which causes the compound of Formula (I) to precipitate as crystals from the solvent mixture. When the solvent mixture containing the water is evaporated, the stabilizer coats the crystals to form particles in a powder form wherein the powder, when added to an aqueous solution, such as a soups or beverages, allows for an increase in the dissolution kinetics of the compound of Formula (I). Hence, an embodiment herein involves the coating of a compound of Formula (I) also referred to an active ingredient.

The method provided here provides the dissolution of an active ingredient in the solvent phase at a high concentration which allows rapid, and in some embodiments the instantaneous, homogenous precipitation of a compound of Formula (I) in the anti-solvent phase. This also contributes to a high loading of a compound of Formula (I) into a powder mixture than would otherwise be obtained from simply spray drying a solution of a compound of Formula (I).

A drying step removes most of the solvent and allows the creation of a dry product which can be re-dispersed in water.

The final weight ratio in the solid, dry powder of a compound of Formula (I) and the stabilizer is comprised between 100:1 and 1:100, more preferably between 10:1 and 1:9, even more preferably between 5:1 and 1:5. In one particular embodiment the ratio is 1:3.

The types of end products where this invention is useful are:
- stocks for soup,
- any food and beverages applications that require incorporation of hydrophobic actives and fast dissolution and higher active concentration in water.

The compounds and solutions provided herein can be used alone or in mixtures and provide a strong kokumi or umami taste at exceptionally low levels.

Provided herein is the use of the solutions, compounds and powder provided as a taste-conferring or enhancing ingredient, and in particular to impart or reinforce kokumi or umami taste.

In a particular embodiment of the invention, said compound (I) is used to impart or reinforce kokumi or umami taste as well as to enhance the saltiness and/or savory perception of a flavor.

Particular applications provided herein are uses to impart or enhance the kokumi or umami taste in savory flavors, such as beef, chicken, pork, and seafood. Surprisingly, in seafood applications such as surimi, or seafood bouillons or snack flavors, compounds according to formula (I) are also found to enhance the perception of sweetness and longevity of the flavor. By contrast, in beef flavors, the compounds according to formula (I) are found to enhance perception of fattiness and tallow notes. Additionally we found that said compounds can increase juiciness in meat based products.

Suitable foodstuff bases, e.g. foods or beverages, can be fried or not, as well as frozen or not, low fat or not, marinated, battered, chilled, dehydrated, instant, canned, reconstituted, retorted or preserved. Typical examples of said foodstuff bases include:
- a seasonings or condiment, such as a stock, a savory cube, a powder mix, a flavored oil, a sauce (e.g. a relish, barbecue sauce, a dressing, a gravy or a sweet and/or sour sauce), a salad dressing or a mayonnaise;
- a meat-based product, such as a poultry, beef or pork based product, a seafood, surimi, or a fish sausage;
- a soup, such as a clear soup, a cream soup, a chicken or beef soup or a tomato or asparagus soup;
- a carbohydrate-based product, such as instant noodles, rice, pasta, potatoes flakes or fried, noodles, pizza, tortillas, wraps;
- a dairy or fat product, such as a spread, a cheese, or regular or low fat margarine, a butter/margarine blend, a butter, a peanut butter, a shortening, a processed or flavored cheese;
- a savory product, such as a snack, a biscuit (e.g. chips or crisps) or an egg product, a potato/tortilla chip, a microwave popcorn, nuts ,a pretzel, a rice cake, a rice cracker, etc;
- an imitation products, such as a dairy (e.g a reformed cheese made from oils, fats and thickeners) or seafood or meat (e.g. a vegetarian meat replacer, veggie burgers) analogue; or
- a pet or animal food.

Particular foodstuffs in which the compound according to formula (I) finds utility include those having topnotes such as seafood, beef, chicken, vegetables, cheese, fat, tallow and/or marrow are important.

For the sake of clarity, it has to be mentioned that, by "foodstuff' we mean here an edible product, e.g. a food or a beverage. Therefore, a flavored article according to the invention comprises one or more compounds according to formula (I), as well as optional benefit agents, corresponding to taste and flavor profile of the desired edible product, e.g. a savory cube. The nature and type of the constituents of the foodstuffs or beverages do not warrant a more detailed description here, the skilled person being able to select them on the basis of his general knowledge and according to the nature of said product.

In one embodiment, the compound may be initially dissolved at high concentration in the solvent. This allows rapid precipitation which leads to a more homogeneous suspension and better polymer protection. An example of the hydrophobic active is (E)-3-(3,4-dimethoxyphenyl)-N-(4-methoxyphenethyl)acrylamide.

The examples provided below are not limiting and are for illustrative purposes only.

### EXAMPLES

### Example 1

4wt% (E)-3-(3,4-dimethoxyphenyl)-N-(4-methoxyphenethyl)acrylamide is dissolved in propylene glycol at 80°C and added into room temperature 1wt% of beef gelatin solution in water, to yield 1:12 ratio of (E)-3-(3,4-dimethoxyphenyl)-N-(4-methoxyphenethyl)acrylamide to Gelatin solution. The solution is lyophilized to yield a dry product which can be re-suspended in water.

### Example 2

4wt% (E)-3-(3,4-dimethoxyphenyl)-N-(4-methoxyphenethyl)acrylamide is dissolved in propylene glycol at 80°C and added into room temperature 1wt% of beef gelatin solution in water, to yield 1:9 ratio of (E)-3-(3,4-dimethoxyphenyl)-N-(4-methoxyphenethyl)acrylamide to gelatin solution. The solution is lyophilized to yield a dry product which can be re-suspended in water.

### Example 3

4wt% (E)-3-(3,4-dimethoxyphenyl)-N-(4-methoxyphenethyl)acrylamide is dissolved in propylene glycol at 80°C and added into room temperature 1wt% of chicken gelatin solution in water, to yield 1:9 ratio of (E)-3-(3,4-dimethoxyphenyl)-N-(4-methoxyphenethyl)acrylamide to Gelatin solution. The solution is lyophilized to yield a dry product which can be re-suspended in water.

### Example 4

A solution of (E)-3-(3,4-dimethoxyphenyl)-N-(4-methoxyphenethyl)acrylamide 3% w/w in n-propanol is prepared at 50°C. Twenty-four (24) g of the warm solution is mixed rapidly (1 minute) with 200 g of an aqueous phase containing 1% of gum Arabic (superstab gum). Precipitation of (E)-3-(3,4-dimethoxyphenyl)-N-(4-methoxyphenethyl)acrylamide occurs immediately, and crystals in the form of elongated platelets are formed. The solvent is removed at 50°C under reduced pressure, and the solid dispersion is subsequently dried under vacuum. The loading of (E)-3-(3,4-dimethoxyphenyl)-N-(4-methoxyphenethyl)acrylamide in the final powder is 25% w/w.

### Example 5

The dissolution kinetics of example 4 in water was tested. A final concentration of (E)-3-(3,4-dimethoxyphenyl)-N-(4-methoxyphenethyl)acrylamide of 20 ppm dissolved in water was targeted. Eighty (80) mg of a solid dispersion of (E)-3-(3,4-dimethoxyphenyl)-N-(4-methoxyphenethyl)acrylamide and gum arabic was dispersed in 1L of milli Q water heated at 60°C. The solution was stirred mechanically by the means of a paddle stirrer at 200 rpm. The dissolution process was followed on-line by monitoring the UV signal of dissolved (E)-3-(3,4-dimethoxyphenyl)-N-(4-methoxyphenethyl)acrylamide with UV/Vis spectroscopy using a fiber optic probe from Ocean Optics. The powder was entirely dissolved after 2 minutes. The maximum dissolution rate during the process was 28 ppm/minute.

### Example 6

Comparative example: (E)-3-(3,4-dimethoxyphenyl)-N-(4-methoxyphenethyl)acrylamide pure. A final concentration of (E)-3-(3,4-dimethoxyphenyl)-N-(4-methoxyphenethyl)acrylamide of 20 ppm dissolved in water was targeted. Twenty (20) mg of the pure (E)-3-(3,4-dimethoxyphenyl)-N-(4-methoxyphenethyl)acrylamide were dispersed in 1L of milli Q water heated at 60°C. The dissolution process yielded 50% of the target concentration of 20 ppm (10 ppm) after 78 minutes. The target concentration could not be achieved after 6 hours. The concentration of dissolved (E)-3-(3,4-dimethoxyphenyl)-N-(4-methoxyphenethyl)acrylamide after 6 hours was 15 ppm (75% of target).

## Claims

1. A method of improving the dissolution rate in water of a compound of Formula (I) 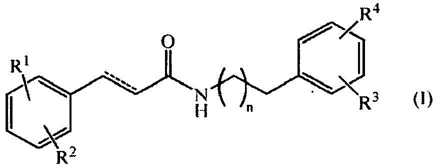 in the form of any one of its stereoisomers or a mixture thereof, and wherein n is an integer from 0 to 2; the dotted line represents a carbon-carbon single or double bond; and each of R¹ to R⁴, when taken independently from each other, represents a hydrogen atom or represents a R⁵ or OR⁵ group, R⁵ representing a C₁ to C₅ alkyl group; and optionally one of the groups R¹ to R⁴ represents -OH; and/or when R¹ and R² are taken together, and/or R³ and R⁴ are taken together, represent a OCH₂O group, provided said groups taken together are adjacent substituents of the phenyl group,
wherein the method consists of the following steps:
a. dissolving the compound in a water miscible solvent at a high concentration of from 1% w/w to 20% w/w;
b. mixing the solution with an aqueous solution in the presence of a water soluble stabilizer to form a solvent mixture comprising a suspension of crystals of the compound; and
c. removing the solvent to obtain a solid dispersion comprising a particle comprised of the compound coated by the stabilizer,
wherein the stabilizer is selected from the group consisting of gelatin, zein, proteins, vegetable protein, casein, starch, pectin, octenyl succinate starch, gum Arabic, saponin and sucrose ester.

2. The method of Claim 1 wherein the solvent of step (a) is chosen among water miscible, volatile organic solvents.

3. The method as recited in Claim 2 wherein the compound is a compound of formula (II) 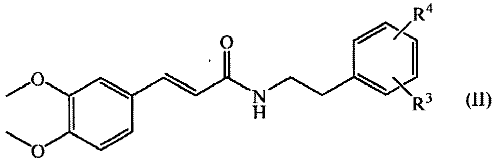 in the form of any one of its stereoisomers or a mixture thereof, and wherein each of R³ or R⁴, taken independently from each other, represents a hydrogen atom or represents a R⁵ or OR⁵ group, R⁵ representing a C₁ to C₅, or even a C₁ to C₃ alkyl group.

4. The method as recited in Claim 1 wherein the compound is selected from the group consisting (E)-3-(3,4-dimethoxyphenyl)-N-(4-methoxyphenethyl)acrylamide, (E)-3-(3,4-dimethoxyphenyl)-N-(3-methoxyphenethyl)acrylamide, (E)-3-(3,4-dimethoxyphenyl)-N-(3-ethoxyphenethyl)acrylamide, (E)-3-(3,4-dimethoxyphenyl)-N-(3-propoxyphenethyl)acrylamide, (E)-3-(3,4-dimethoxyphenyl)-N-(4-isopropoxyphenethyl)acrylamide, (E)-3-(3,4-dimethoxyphenyl)-N-(4-ethylphenethyl)acrylamide, (E)-3-(3,4-dimethoxyphenyl)-N-(3,4-dimethylphenethyl)acrylamide, (E)-3-(3,4-dimethoxyphenyl)-N-(4-isopropylphenethyl)acrylamide or (E)-3-(3,4-dimethoxyphenyl)-N-(3-methylphenethyl)acrylamide.

5. The method as recited Claim 1 wherein the solid dispersion is lyophilized to form solid particles.

6. The method as recited in Claim 1 wherein the solid dispersion is spray dried to form solid particles.

7. The method as recited in any one of Claims 1 to 2 wherein the solvent is selected from the group consisting of propylene glycol, benzyl alcohol, propanol, ethanol, triacetin, and ethyl citrate.

8. The method as recited in any one of Claims 1 to 2 wherein the gelatin is selected from the group consisting of chicken, fish and beef gelatin.

9. A particle prepared or obtainable according to any one of Claims 1 to 2.

10. A particle comprising a crystallized compound as defined in any one of Claims 1 to 2 coated with gelatin wherein the particles have a length of 1 µm to 10 µm and a width of 0.3 µm to 3 µm and wherein the particles are provided in the absence of a block copolymer and dissolve in water at a rate up to 30 ppm/min.

11. The particle as recited in claim 10 where the particles dissolved at a rate of up to 10 ppm/min at a temperature of about 6o°C.

## Patentansprüche

1. Verfahren zum Verbessern der Auflösungsgeschwindigkeit einer Verbindung der Formel (I) 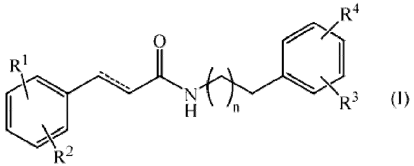 in Wasser in Form einer beliebigen ihrer Stereoisomere oder einer Mischung davon, und wobei n eine ganze Zahl von 0 bis 2 ist; die gepunktete Linie eine Kohlenstoff-Kohlenstoff-Einfach- oder Doppelbindung darstellt und jedes von R¹ bis R⁴, wenn voneinander unabhängig genommen, ein Wasserstoffatom darstellt oder eine R⁵- oder OR⁵-Gruppe darstellt, wobei R⁵ eine C₁- bis C₅-Alkyl-Gruppe darstellt; und wahlweise eine der Gruppen R¹ bis R⁴ -OH darstellt; und/oder, wenn R¹ und R² zusammengenommen sind und/oder R³ und R⁴ zusammengenommen sind, eine OCH₂O-Gruppe darstellen, vorausgesetzt, dass, wenn sie zusammengenommen werden, sie benachbarte Substituenten der Phenyl-Gruppe sind,
wobei das Verfahren aus den folgenden Schritten besteht:
a. Auflösen der Verbindung in einem mit Wasser mischbaren Lösemittel bei einer hohen Konzentration von 1% Gewicht/Gewicht bis 20% Gewicht/Gewicht;
b. Mischen der Lösung mit einer wässrigen Lösung in Gegenwart eines wasserlöslichen Stabilisators, um eine Lösemittelmischung zu bilden, die eine Suspension von Kristallen der Verbindung umfasst; und
c. Entfernen des Lösemittels, um eine feste Dispersion zu erhalten, die eine Partikel umfasst, die aus der durch den Stabilisator beschichteten Verbindung besteht,
wobei der Stabilisator ausgewählt ist aus der Gruppe bestehend aus Gelatine, Zein, Proteinen, pflanzlichem Protein, Casein, Stärke, Pektin, Octenylsuccinatstärke, Gummiarabikum, Saponin und Saccharoseester.

2. Verfahren nach Anspruch 1, wobei das Lösemittel von Schritt (a) ausgewählt wird aus mit Wasser mischbaren, flüchtigen organischen Lösemitteln.

3. Verfahren nach Anspruch 2, wobei die Verbindung dargestellt wird durch eine Verbindung der Formel (II) 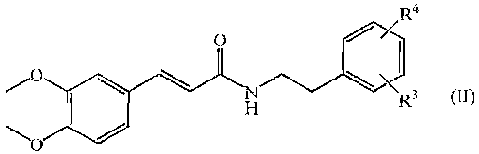 in Form einer beliebigen ihrer Stereoisomere oder einer Mischung davon, und wobei jedes von R³ oder R⁴, wenn voneinander unabhängig genommen, ein Wasserstoffatom oder eine R⁵ oder OR⁵-Gruppe darstellt, wobei R⁵ eine C₁-C₅-Gruppe, oder sogar eine C₁-C₃ Alkyl-Gruppe darstellt.

4. Verfahren nach Anspruch 1, wobei die Verbindung ausgewählt ist aus der Gruppe bestehend aus (E)-3-(3,4-Dimethoxyphenyl)-N-(4-methoxyphenethyl)acrylamid, (E)-3-(3,4-Dimethoxyphenyl)-N-(3-methoxyphenethyl)acrylamid, (E)-3-(3,4-Dimethoxyphenyl)-N-(3-ethoxyphenethyl)acrylamid, (E)-3-(3,4-Dimethoxyphenyl)-N-(3-propoxyphenethyl)acrylamid, (E)-3-(3,4-Dimethoxyphenyl)-N-(4-isopropoxyphenethyl)acrylamid, (E)-3-(3,4-Dimethoxyphenyl)-N-(4-ethylphenethyl) acrylamid, (E)-3-(3,4-Dimethoxyphenyl)-N-(3,4-dimethylphenethyl)acrylamid, (E)-3-(3,4-Dimethoxyphenyl)-N-(4-isopropylphenethyl)acrylamid oder (E)-3-(3,4-Dimethoxyphenyl)-N-(3-methylphenethyl)acrylamid.

5. Verfahren nach Anspruch 1, wobei die feste Dispersion lyophilisiert wird, um feste Partikel zu bilden.

6. Verfahren nach Anspruch 1, wobei die feste Dispersion sprühgetrocknet wird, um feste Partikel zu bilden.

7. Verfahren nach Anspruch 1 bis 2, wobei das Lösemittel ausgewählt ist aus der Gruppe bestehend aus Propylenglykol, Benzylalkohol, Propanol, Ethanol, Triacetin und Ethylcitrat.

8. Verfahren nach einem der Ansprüche 1 bis 2, wobei die Gelatine ausgewählt ist aus der Gruppe bestehend aus Hühnchen-, Fisch- und Rindergelatine.

9. Partikel, hergestellt oder erhältlich nach irgendeinem der Ansprüche 1 bis 2.

10. Partikel, umfassend eine kristallisierte Verbindung nach einem der Ansprüche 1 bis 2, das mit Gelatine beschichtet ist, wobei die Partikel eine Länge von etwa 1 µm bis etwa 10 µm und eine Breite von etwa 0,3 µm bis etwa 3 µm aufweisen und wobei die Partikel in Abwesenheit eines Blockcopolymers bereitgestellt werden und sich in Wasser mit einer Geschwindigkeit von bis zu 30 ppm/Min auflösen.

11. Partikel nach Anspruch 10, wobei die Partikel mit einer Geschwindigkeit von bis zu 10 ppm/Min bei einer Temperatur von etwa 60 °C aufgelöst werden.

## Revendications

1. Procédé pour améliorer la vitesse de dissolution dans l'eau d'un composé de Formule (I) 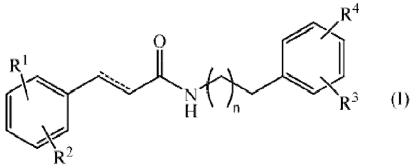 sous la forme de l'un quelconque de ses stéréoisomères ou d'un mélange de ceux-ci, et où n est un entier de 0 à 2; le trait en pointillé représente une simple ou double liaison carbone-carbone; et chacun des R¹ à R⁴, quand ils sont pris indépendamment les uns des autres, représente un atome d'hydrogène ou représente un groupe R⁵ ou OR⁵ R⁵ représentant un groupe alkyle en C₁ à C₅; et optionnellement, un des groupes R¹ à R⁴ représente -OH; et/ou quand R¹ et R² sont pris ensemble, et/ou R³ et R⁴ sont pris ensemble, ils représentent un groupe OCH₂O, à condition que lesdits groupes pris ensemble soient des substituants adjacents du groupe phényle,
lequel procédé comprend les étapes suivantes consistant à:
a. dissoudre le composé dans un solvant miscible à l'eau à une concentration élevée de 1% p/p à 20% p/p;
b. mélanger la solution avec une solution aqueuse en présence d'un stabilisant hydrosoluble pour former un mélange solvant comprenant une suspension de cristaux du composé; et
c. éliminer le solvant pour obtenir une dispersion solide comprenant une particule constituée du composé revêtu du stabilisant,
où le stabilisant est sélectionné dans le groupe constitué par les suivants: gélatine, zéine, protéines, protéine végétale, caséine, amidon, pectine, octénylsuccinate d'amidon, gomme arabique, saponine et ester de saccharose.

2. Procédé selon la revendication 1, dans lequel le solvant de l'étape (a) est sélectionné parmi les solvants organiques volatils, miscibles à l'eau.

3. Procédé selon la revendication 2, dans lequel le composé est représenté par un composé de Formule (II) 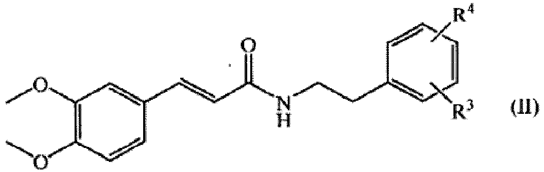 sous la forme de l'un quelconque de ses stéréoisomères ou d'un mélange de ceux-ci, et dans lequel chaque R³ ou R⁴, pris indépendamment l'un de l'autre, représente un atome d'hydrogène ou représente un groupe R⁵ ou OR⁵, R⁵ représentant un groupe alkyl en C₁ à C₅, ou même en C₁ à C₃.

4. Procédé selon la revendication 1, dans lequel le composé est sélectionné dans le groupe constitué par les suivants: (E)-3-(3,4-diméthoxyphényl)-N-(4-méthoxyphénéthyl)acrylamide, (E)-3-(3,4-diméthoxyphényl)-N-(3-méthoxyphénéthyl)acrylamide, (E)-3-(3,4-diméthoxyphényl)-N-(3-éthoxyphénéthyl)acrylamide, (E)-3-(3,4-diméthoxyphényl)-N-(3-propoxyphénéthyl)acrylamide, (E)-3-(3,4-diméthoxyphényl)-N-(4-isopropoxyphénéthyl)acrylamide, (E)-3-(3,4-diméthoxyphényl)-N-(4-éthylphénéthyl)acrylamide, (E)-3-(3,4-diméthoxyphényl)-N-(3,4-diméthylphénéthyl)acrylamide, (E)-3-(3,4-diméthoxyphényl)-N-(4-isopropylphénéthyl)acrylamide ou (E)-3-(3,4-diméthoxyphényl)-N-(3-méthylphénéthyl)acrylamide.

5. Procédé selon la revendication 1, dans lequel la dispersion solide est lyophilisée pour former des particules solides.

6. Procédé selon la revendication 1, dans lequel la dispersion solide est séchée par atomisation pour former des particules solides.

7. Procédé selon l'une quelconque des revendications 1 à 2, dans lequel le solvant est sélectionné dans le groupe constitué par le propylèneglycol, l'alcool benzylique, le propanol, l'éthanol, la triacétine, et le citrate d'éthyle.

8. Procédé selon l'une quelconque des revendications 1 à 2, dans lequel la gélatine est sélectionnée dans le groupe constitué par la gélatine de volaille, de poisson et de boeuf.

9. Particule préparée ou obtenue selon l'une quelconque des revendications 1 à 2.

10. Particule comprenant un composé cristallisé tel que défini dans l'une quelconque des revendications 1 à 2 revêtu de gélatine où les particules ont une longueur d'environ 1 µm à environ 10 µm et une largeur d'environ 0,3 µm à environ 3 µm et où les particules sont fournies en l'absence d'un copolymère séquencé et se dissolvent dans l'eau à une vitesse pouvant aller jusqu'à 30 ppm/min.

11. Particule selon la revendication 10 où les particules se dissolvent à une vitesse pouvant aller jusqu'à 10 ppm/min à une température d'environ 60°C.
